# EUROPÄISCHE PATENTANMELDUNG

(11) **EP 4 736 656 A1**
(43) Veröffentlichungstag der Anmeldung: **06.05.2026**
(21) Anmeldenummer: 24210925.4
(22) Anmeldetag: 05.11.2024
(51) Int. Cl.: A22C 21/00

(54) **EINRICHTUNG ZUM VERÄNDERN DER AXIALEN AUSRICHTUNG VON HÄNGENDEN LEBENSMITTELN SOWIE VORRICHTUNG ZUM FÖRDERN VON HÄNGENDEN LEBENSMITTELN**

(71) Anmelder: Baader Poultry Holding GmbH, 23556 Lübeck (DE)
(72) Erfinder: Andersen, Torben, Trige (DK); Andersen, Rasmus, Trige (DK); Kjeldsen, Poul, Trige (DK); Zdrenka, Simon, Trige (DK)
(74) Vertreter: Stork Bamberger Patentanwälte PartmbB

(57) **Zusammenfassung**

Die vorliegende Erfindung betrifft Einrichtung (10) zum Verändern der axialen Ausrichtung von Lebensmitteln (30), umfassend einen Grundkörper (11) mit einem Produktabschnitt (12) zum hängenden Anordnen von Lebensmitteln (30) mittels mindestens eines an dem Produktabschnitt (12) anordenbaren Halteelements (13) und einem Transportabschnitt (14) zum Anordnen der Einrichtung (10) an einer Fördereinrichtung (15), wobei die Einrichtung (10) einen Drehmechanismus (17) umfasst, der zum Drehen des Produktabschnitts (12) ausgebildet ist und ein zwischen zumindest einer ersten Auslöseposition (18) und einerzweiten Auslöseposition (19) veränderbares Auslöseelement (20) mit mindestens einem Auslöseabschnitt (21) und mindestens ein mit dem mindestens einen Auslöseelement (20) verbundenes Übertragungselement (22) umfasst, wobei das mindestens eine Übertragungselement (22) derart mit dem Produktabschnitt (12) in Wirkverbindung steht, dass zumindest bei einem Wechsel des Auslöseelements (20) von der ersten Auslöseposition (18) in die zweite Auslöseposition (19) eine Veränderung des Produktabschnitts (12) mittels des mindestens einen Übertragungselements (22) zur zumindest abschnittsweisen axialen Drehung der Ausrichtung des Produktabschnitts (12) ausgebildet ist. Des Weiteren betrifft die Erfindung eine entsprechende Vorrichtung (100) zum Fördern von Lebensmitteln (30).

## Beschreibung

Die vorliegende Erfindung betrifft eine Einrichtung, ausgebildet und eingerichtet zum Verändern der axialen Ausrichtung von hängenden Lebensmitteln, insbesondere von Geflügel oder Geflügelteilen, umfassend einen Grundkörper mit einem Produktabschnitt zum hängenden Anordnen von Lebensmitteln, insbesondere von Geflügel oder Geflügelteilen, mittels mindestens eines an dem Produktabschnitt anordenbaren Halteelements und einem Transportabschnitt zum Anordnen der Einrichtung an einer Fördereinrichtung, zum zumindest abschnittsweisen Bewegen der Einrichtung entlang einer Förderstrecke.

Weiterhin betrifft die Erfindung eine Vorrichtung, ausgebildet und eingerichtet zum Fördern von hängenden Lebensmitteln, insbesondere von Geflügel oder Geflügelteilen, umfassend mindestens eine Fördereinrichtung mit einer zum hängenden Fördern von Lebensmitteln entlang einer Förderstrecke mit einer Mehrzahl von jeweils zur Aufnahme eines Lebensmittels eingerichteten Einrichtung.

Einrichtungen zum Verändern der axialen Ausrichtung von Lebensmitteln sowie Vorrichtungen zum Fördern von hängenden Lebensmitteln, insbesondere auch von Geflügel oder Geflügelteilen, sind seit vielen Jahren aus dem Stand der Technik bekannt und dienen der Bereitstellung der entsprechenden Lebensmittel an Bearbeitungsstationen oder dem Transport innerhalb eines Bearbeitungsbetriebes. Derartige Einrichtungen sowie Vorrichtungen umfassen regelmäßig komplexe Bauteile und verursachen hohe Kosten bei der Realisierung sowie im täglichen Betrieb.

Im Bereich der Lebensmittelverarbeitung, insbesondere bei der Förderung von Geflügel oder Geflügelteilen, spielen Halteelemente, sogenannte "Shackles", eine zentrale Rolle. Diese Halteelemente sind in der Regel Teil einer Fördereinrichtung, die in Bearbeitungsbetrieben für den hängenden Transport von Schlachtgeflügel oder Geflügelteilen entlang einer Förderstrecke eingesetzt wird. Die Halteelemente sind so konzipiert, dass sie das Geflügel sicher fixieren und es während des gesamten Transportvorgangs innerhalb des Bearbeitungsbetriebs durch verschiedene Stationen, wie z. B. Entfederungs-, Ausweide- oder Verpackungsstationen, befördern.

Der Stand der Technik umfasst Halteelemente, sogenannte Shackles, mit denen Lebensmittel, insbesondere Geflügel, an Beinen, Flügeln oder anderen Körperteilen gehalten und mittels einer starren Fördereinrichtung bewegt werden. Diese Fördereinrichtungen basieren üblicherweise auf kontinuierlich angetriebenen Förderketten oder -bändern, an denen die Halteelemente in regelmäßigen Abständen angebracht sind. Auf diese Weise werden die Lebensmittel in einer vorgegebenen, meist linearen Bewegungsrichtung entlang einer bestimmten Förderstrecke transportiert, die sowohl horizontale als auch vertikale Streckenabschnitte umfassen kann.

Ein wesentlicher Nachteil der derzeit bekannten Fördersysteme liegt in der eingeschränkten Beweglichkeit des transportierten Geflügels. Die starre Kopplung der Halteelemente, der sogenannten Shackles, mit der Fördereinrichtung erlaubt nur eine lineare, festgelegte Bewegungsbahn, die eine flexible Handhabung des Geflügels während des Transports erschwert. Diese Einschränkung kann insbesondere dann problematisch sein, wenn verschiedene Bearbeitungsschritte unterschiedliche Positionierungen oder Bewegungen des Geflügels erfordern, wie dies beispielsweise beim Schneiden, Sortieren oder Verpacken der Fall ist. Darüber hinaus kann die starre Bewegung zu unerwünschten Spannungen oder Verformungen der Lebensmittel führen, was die Qualität der Endprodukte beeinträchtigen kann.

Ein weiteres Problem besteht darin, dass die derzeit üblicherweise eingesetzten Halteelemente, die sogenannten Shackles, häufig nicht in der Lage sind, unterschiedliche Größen und Formen von Lebensmitteln, insbesondere von Geflügel oder Geflügelteilen, adäquat zu handhaben. Dies führt zu einer erhöhten Fehleranfälligkeit bei der Fixierung des jeweiligen Lebensmittels, insbesondere bei unregelmäßig geformten Geflügelteilen wie Flügeln oder Bruststücken. Diese Unzulänglichkeiten können nicht nur die Effizienz der Bearbeitung verringern, sondern auch die Sicherheit des Transportprozesses beeinträchtigen, da sich Geflügelteile während des Transports unbeabsichtigt lösen oder verschieben können.

Es ist bekannt, sogenannte Shackle während des Transports entlang einer Förderstrecke mittels eines Zahnradmechanismus zu drehen. Diese Technologie wird insbesondere in der Geflügelverarbeitung für verschiedene Zwecke eingesetzt. Dabei wird üblicherweise ein Zahnrad oder ein ähnliches drehbares Element am Shackle befestigt, während parallel zur Förderstrecke ein Zahnstangenmechanismus verläuft, der die Drehbewegung des Shackle aktiviert. Ein wesentliches Problem dieses Ansatzes besteht jedoch darin, dass das Zahnrad und die Zahnstange genau ineinander greifen müssen, um eine zuverlässige und sichere Drehung des Shackles zu ermöglichen. Bei hohen Fördergeschwindigkeiten besteht ein erhebliches Risiko, dass dieses System nicht ordnungsgemäß funktioniert und es zu einem vollständigen Ausfall des Zahnstangenmechanismus kommt.

Aus dem Stand der Technik sind weitere Verfahren und Vorrichtungen zum Drehen von "Shackles" bekannt. So weist der Gegenstand der EP 0 916 265 unter anderem auch Einschränkungen hinsichtlich der Handhabung bei hohen Fördergeschwindigkeiten auf. Durch exzentrisch angeordnete Halterungen, die über einen Malteserkreuzmechanismus gesteuert werden, können Schlachttiere entlang einer Förderstrecke gedreht werden. Diese Konstruktion ermöglicht zwar das gezielte Ansteuern oder Umfahren bestimmter Verarbeitungsstationen, ohne dass mehrere parallele Förderstrecken erforderlich sind, erfordert aber einen hohen mechanischen und baulichen Aufwand. Die Steuerung erfolgt über Betätigungselemente, die mit dem Malteserkreuz interagieren, um die Tiere in die richtige Position zu bringen. Aufgrund der hohen mechanischen Komplexität, die sich aus der exzentrischen Anordnung und dem Malteserkreuz ergibt, ist eine genaue Justierung und regelmäßige Wartung erforderlich, um eine zuverlässige Funktion zu gewährleisten. Außerdem sind die vielen beweglichen Teile anfällig für Verschleiß und Fehlfunktionen, was den Wartungsaufwand im Vergleich zu herkömmlichen starren Fördersystemen erhöht. Die in der EP 3 116 323 beschriebene Vorrichtung ist zwar grundsätzlich für höhere Fördergeschwindigkeiten ausgelegt, bietet jedoch eine geringere Zuverlässigkeit und keine sequentielle Drehung der Shackles. Die angegebene Vorrichtung ermöglicht es, Schlachterzeugnisse, insbesondere Geflügel, während des Transports in einem bogenförmigen Abschnitt in einer Verarbeitungslinie zu drehen. Dies wird durch den Einsatz von Drehelementen erreicht, die das Geflügel in die gewünschte Position bringen. Auf diese Weise soll der Kontakt zwischen benachbarten Vögeln minimiert werden, um die Verletzungsgefahr, insbesondere an den Flügeln, zu verringern und die Wiegegenauigkeit zu verbessern. Diese Lösung erfordert jedoch eine relativ komplexe Mechanik und eine genaue Einstellung der rotierenden Elemente. Diese Anforderungen könnten potenziell zu höheren Wartungs- und Betriebskosten führen. Darüber hinaus stellt die Implementierung solcher Systeme in bestehende Produktionslinien eine technische Herausforderung dar, die einen gewissen Anpassungsaufwand erfordert, da die beschriebene Vorrichtung einen bogenförmig Abschnitt erfordert, der zudem nicht für alle Einsatzzwecke gleichermaßen geeignet ist. Ein weiterer Nachteil der oben genannten Veröffentlichungen besteht darin, dass die Drehung des Shackles immer im Verhältnis 1:1 zur Drehung des Zahnrades erfolgt. Das bedeutet, dass sich der Shackle um genau den gleichen Winkel dreht, wie sich das Zahnrad bewegt.

Es ist daher Aufgabe der vorliegenden Erfindung eine Einrichtung bereitzustellen, die eine sichere, zuverlässige und bedarfsgerechte Drehung, insbesondere bei hohen Fördergeschwindigkeiten, gewährleistet. Darüber hinaus soll die Einrichtung vielseitig einsetzbar sein und sich für verschiedene Lebensmittel, insbesondere verschiedene Verarbeitungsschritte von Geflügel oder Geflügelteilen eignen. Des Weiteren ist es Aufgabe der vorliegenden Erfindung eine entsprechende Vorrichtung vorzuschlagen.

Diese Aufgabe wird durch die eingangs genannte Einrichtung dadurch gelöst, dass die Einrichtung einen Drehmechanismus umfasst, wobei der Drehmechanismus zum zumindest abschnittsweisen Drehen des Produktabschnitts ausgebildet und eingerichtet ist, wobei der Drehmechanismus ein zwischen zumindest einer ersten Auslöseposition und einer zweiten Auslöseposition veränderbares Auslöseelement mit mindestens einem Auslöseabschnitt und mindestens ein mit dem mindestens einen Auslöseelement verbundenes Übertragungselement umfasst, wobei das mindestens eine Übertragungselement derart mit dem Produktabschnitt in Wirkverbindung steht, dass zumindest bei einem Wechsel des Auslöseelements von der ersten Auslöseposition in die zweite Auslöseposition eine Veränderung des Produktabschnitts mittels des mindestens einen Übertragungselements zur zumindest abschnittsweisen axialen Drehung der Ausrichtung des Produktabschnitts ausgebildet und eingerichtet ist. Die erfindungsgemäße Einrichtung kann alternativ unter anderem auch als Rotationseinrichtung, Drehvorrichtung oder dergleichen bezeichnet werden. Darüber hinaus kann der Produktabschnitt beispielsweise auch als Produktelement und der Transportabschnitt als Transportelement bezeichnet werden. Mit der erfindungsgemäßen Einrichtung wird sichergestellt, dass hängende Lebensmittel, insbesondere Geflügel oder Geflügelteile, zuverlässig, individuell und bedarfsgerecht in ihrer axialen Ausrichtung veränderbar sind. Durch die erfindungsgemäße Einrichtung ist es insbesondere möglich Halteelemente, sogenannte Shackle oder auch Schäkel, zum Transport von Geflügel oder Geflügelteilen, in ihrer axialen Ausrichtung zu verändern, wodurch die entsprechenden Lebensmittel beispielsweise gedreht werden können. Dabei bietet die erfindungsgemäße Einrichtung insbesondere entsprechende Vorteile bei der Bearbeitung von Geflügel oder Geflügelteilen, wobei das Geflügel oder die Geflügelteile vorzugsweise an den Beinen hängend angeordnet sind. Die Einrichtung ermöglicht eine präzise und kontrollierte Drehung des Produktabschnitts, wodurch eine exakte Positionierung der entsprechenden Lebensmittel, insbesondere von Geflügel oder Geflügelteilen, während des Transports entlang der Förderstrecke gewährleistet ist. Darüber hinaus bietet der Drehmechanismus, der alternativ auch als Dreheinheit oder dergleichen bezeichnet werden kann, durch das zwischen verschiedenen Auslösepositionen veränderbare Auslöseelement eine hohe Flexibilität in der Ausrichtung des Produktabschnitts, so dass je nach Position des Auslöseelements durch die entsprechende und daraus resultierende Drehung des Lebensmittels an diesem oder unter Berücksichtigung desselben gezielte und unterschiedliche Bearbeitungsschritte durchgeführt werden können. Bei der erfindungsgemäßen Einrichtung mit dem Drehmechanismus ist die Rotation des Produktabschnitts und damit unmittelbar auch des Shackles mit einem variablen Übersetzungsverhältnis, beispielsweise von 1:2 oder höher, einstellbar. Dies ermöglicht eine große Flexibilität und Effizienz bei der Drehung des Shackles während des Transports sowie an entsprechend vorgesehenen Bearbeitungsstationen.

Durch den Drehmechanismus mit dem Auslöseelement mit mindestens einem Auslöseabschnitt und mindestens einem mit dem Auslöseelement verbundenen Übertragungselement greifen die entsprechenden Komponenten der erfindungsgemäßen Einrichtung stets zuverlässig ineinander, wodurch ein kontinuierlicher und sicherer Betrieb auch bei hohen Geschwindigkeiten gewährleistet ist. Das Auslöseelement und/oder das mindestens eine Übertragungselement sind vorzugsweise als mechanische Bauteile ausgebildet und eingerichtet, die eine Kraftübertragung entsprechend der gewünschten Vorgaben ermöglichen. Insbesondere bietet die erfindungsgemäße Einrichtung mit dem Drehmechanismus je nach Ausgestaltung der Bauteile die Möglichkeit, bei hohen Fördergeschwindigkeiten (bis zu 400 Geflügel(-teile) pro Minute) eine langsame Drehbewegung des Produktabschnitts - und damit auch, falls vorhanden, der Shackles - zu gewährleisten. Diese langsame Drehbewegung ist von besonderer Bedeutung, um zu verhindern, dass Lebensmittel, insbesondere Beine, Füße oder andere Teile, aus dem Produktabschnitt oder Shackle verrutschen oder herausfallen. Ein weiterer Vorteil ist die Zuverlässigkeit des Drehmechanismus, insbesondere bei hohen Fördergeschwindigkeiten, der eine gleichmäßige und sichere Drehung des Produktabschnitts ermöglicht. Gleichzeitig erfolgt die Drehung schonend und kontinuierlich, wodurch die Gefahr von Beschädigungen oder Verformungen der Einrichtung oder angrenzender Bauteile vermieden wird. Darüber hinaus ermöglicht die automatische Anpassung des Auslöseelements zwischen den Auslösepositionen einen effizienten und reibungslosen Ablauf des Prozesses, ohne dass ein manuelles Eingreifen erforderlich ist, was die Gesamteffizienz der Anlagen erhöht, in denen die erfindungsgemäßen Einrichtungen zum Einsatz kommen.

Der Grundkörper der erfindungsgemäßen Einrichtung ist vorzugsweise zumindest teilweise als Gehäuse ausgebildet oder von einem entsprechenden Gehäuse umschlossen. Derartige Grundkörper bzw. Gehäuse ermöglichen eine vereinfachte Reinigung und schützen die innenliegenden Bauteile vor äußeren unbeabsichtigten Zugriffen, Verschmutzungen sowie Verunreinigungen mit unerwünschten Stoffen. Weiterhin werden Beschädigungen an empfindlichen Bauteilen, die zur Ausführung der Drehbewegung erforderlich sind, vermieden.

Ein weiterer Vorteil der erfindungsgemäßen Einrichtung ist die selektive Ansteuerung der Auslöseelemente, wodurch eine vorgegebene Ausrichtung der Produktabschnitte möglich ist, so dass zum Beispiel jede zweite Einrichtung in eine andere Richtung weist. Dies ermöglicht, je nach Einsatzzweck, eine individuelle und effiziente Möglichkeit zur Bereitstellung einer gewünschten axialen Veränderung. Darüber hinaus bietet die Einrichtung die Möglichkeit, den Drehmechanismus für verschiedenste Anwendungen im Zusammenhang mit der Förderung von Lebensmitteln, insbesondere von Geflügel oder Geflügelteilen, einzusetzen und anzupassen, bei denen eine Drehung beispielsweise im Zusammenhang mit Verarbeitungs- oder Übergabeprozessen erforderlich ist.

Die erfindungsgemäße Einrichtung ist zudem kostengünstig herstellbar und lässt sich in großen Stückzahlen auf einfache Art und Weise produzieren, was sie für den großindustriellen Einsatz geeignet macht. Darüber hinaus ist die Einrichtung im Vergleich zu bestehenden Lösungen einfach und standardisiert herstellbar, was ebenfalls zu geringeren Produktions- und Materialkosten beiträgt, ohne die Funktionalität oder Zuverlässigkeit zu beeinträchtigen. Dies führt zu einer wirtschaftlich vorteilhaften Lösung, die leicht in großen Verarbeitungsanlagen implementiert werden kann und somit Skaleneffekte unterstützt.

Unter den mittels der erfindungsgemäßen Einrichtung in ihrer axialen Ausrichtung zu verändernden "Lebensmitteln" kommen im Sinne der Erfindung beliebige Lebensmittel in Betracht, die hängend anordenbar sind, insbesondere Geflügel oder Geflügelteile. Soweit es sich bei solchen Geflügel oder Geflügelteilen um Geflügelkörper oder Geflügelbeine handelt, sind diese besonders bevorzugt an den Fußgelenken hängend an den entsprechenden Halteelementen angeordnet. Es ist jedoch mittels der erfindungsgemäßen Vorrichtung in gleicher Weise möglich, auch andere Lebensmittel oder andere Geflügelteile axial zu verändern bzw. zu fördern, die nicht an den Beinen hängend, sondern allgemein hängend, beispielsweise am Kopf, zu fördern sind. Weitere vorzugsweise zum axialen Verändern bzw. Fördern vorgesehene Lebensmittel im Bereich der Geflügelverarbeitung können beispielsweise etwaige Pakete von Innereien oder Eingeweiden sein.

Unter einem "Produktabschnitt" im Sinne der Erfindung ist eine Komponente zu verstehen, die zur hängenden Anordnung und dem daraus resultierenden Transport von Lebensmitteln, insbesondere Geflügel oder Geflügelteilen, vorgesehen ist. Dieser Abschnitt dient insbesondere dazu und ist entsprechend ausgebildet, eine Anordnung der Lebensmittel an der erfindungsgemäßen Einrichtung zu ermöglichen. Der Produktabschnitt kann dabei beispielsweise als allgemeine Aufnahme, wie ein Haken oder eine Öse, ausgebildet sein oder alternativ spezifisch an die entsprechenden anzuordnenden Halteelemente oder Lebensmittel angepasst sein.

Unter einem "Transportabschnitt" im Sinne der Erfindung ist eine Komponente zu verstehen, die insbesondere dazu dient, die Einrichtung an einer Fördereinrichtung anzuordnen und eine zumindest abschnittsweise Bewegung der Einrichtung entlang einer Förderstrecke zu ermöglichen. Dieser Transportabschnitt ist dabei so ausgebildet, dass er eine stabile und zuverlässige Verbindung mit der Fördereinrichtung gewährleistet, wodurch ein zuverlässiger Transport der Einrichtung sichergestellt ist. Der Transportabschnitt kann in verschiedenen Ausführungen vorliegen und an entsprechende vorhandene Fördereinrichtungen angepasst sein. Der Transportabschnitt ist zweckmäßig so zu gestalten, dass er den spezifischen Anforderungen der jeweiligen Förderstrecke gerecht wird. Dies kann beispielsweise durch geeignete Befestigungselemente oder Halterungen erfolgen, die eine flexible Anordnung und Anpassung an unterschiedliche Fördersysteme sowie die zu fördernden Lebensmittel ermöglichen.

Eine bevorzugte Ausführungsform ist dadurch gekennzeichnet, dass der Grundkörper zumindest aus einem dem Transportabschnitt zugewandten Grundkörperunterteil und einem dem Produktabschnitt zugewandten Grundkörperoberteil gebildet ist. Der Grundkörper der erfindungsgemäßen Einrichtung ist vorzugsweise zumindest teilweise als Gehäuse ausgebildet oder von einem entsprechenden Gehäuse zumindest teilweise umgeben. Ein Vorteil der beschriebenen bevorzugten Ausführungsform liegt in der modularen Bauweise des Grundkörpers, der aus einem dem Transportabschnitt zugewandten Grundkörperunterteil und einem dem Produktabschnitt zugewandten Grundkörperoberteil besteht. Der Grundkörper ist insbesondere zweischalig ausgebildet, die miteinander verbindbar sind und im Wesentlichen die Komponenten für den Drehmechanismus enthalten. Diese Aufteilung ermöglicht eine flexible Anpassung und erleichtert die Montage sowie die Wartung der Einrichtung. Darüber hinaus trägt die Trennung in Unter- und Oberteil dazu bei, dass die Komponenten spezifisch auf die Anforderungen des Transports und der Produktanordnung abgestimmt und in großen Stückzahlen aus den jeweils gewünschten Materialien hergestellt werden können.

Eine vorteilhafte Weiterbildung zeichnet sich dadurch aus, dass der Drehmechanismus im Wesentlichen zwischen dem Produktabschnitt und dem Transportabschnitt, insbesondere im Wesentlichen innerhalb des Grundkörpers zwischen dem Grundkörperunterteil und dem Grundkörperoberteil, ausgebildet und eingerichtet ist. Ein Vorteil dieser vorteilhaften Weiterbildung besteht darin, dass der Drehmechanismus im Wesentlichen zwischen dem Produktabschnitt und dem Transportabschnitt angeordnet ist, insbesondere innerhalb des Grundkörpers zwischen dem Grundkörperunterteil und dem Grundkörperoberteil. Diese Anordnung schützt den Drehmechanismus vor äußeren Einflüssen und reduziert den Verschleiß, was die Lebensdauer und Zuverlässigkeit der Einrichtung erhöht. Außerdem ermöglicht diese Anordnung eine kompakte Bauweise, die die Installation und Integration in bestehende Fördersysteme erleichtert, ohne zusätzlichen Platzbedarf zu verursachen oder komplexe Interaktionssysteme zu erfordern.

In einer weiteren vorteilhaften Ausgestaltung der Erfindung ist der Drehmechanismus als ein Stirnradgetriebe, insbesondere als ein Zahnstangengetriebe, ausgebildet und eingerichtet. Dieser Mechanismus ermöglicht eine präzise und kontrollierte axiale Veränderung der Ausrichtung von hängenden Lebensmitteln wie Geflügel oder Geflügelteilen. Ein Stirnradgetriebe bietet einen hohen Wirkungsgrad bei der Drehübertragung und ermöglicht eine gleichmäßige Bewegung, was insbesondere für die exakte Steuerung der Positionierung der Lebensmittel während des Bearbeitungsprozesses vorteilhaft ist. Darüber hinaus ist es möglich, das Übersetzungsverhältnis je nach Wahl des Getriebes oder der verwendeten Komponenten anzupassen und auszuwählen. Generell bietet ein Zahnstangengetriebe den Vorteil, dass eine lineare Bewegung in eine Drehbewegung umgewandelt werden kann, was eine flexible Anpassung an unterschiedliche Verarbeitungsanforderungen ermöglicht. Der Drehmechanismus trägt somit zu einer höheren Genauigkeit und Zuverlässigkeit bei, was die Qualität der Bearbeitung und die Sicherheit bei der bestimmungsgemäßen Verwendung erhöht. Darüber hinaus können zusätzliche Komponenten für die ergänzende Funktion des Drehmechanismus als Stirnrad- oder Zahnstangengetriebe erforderlich oder zweckmäßig sein. Dazu gehören unter anderem Führungs- und Lagerkomponenten zur Stabilisierung des Getriebes sowie ein Aktuator oder eine Antriebseinheit zur Auslösung der Drehbewegung. Ein Verriegelungsmechanismus kann vorgesehen sein, um die exakte Positionierung des Produktabschnitts zu gewährleisten, während Sensoren und eine Steuereinheit die genaue Überwachung und Einstellung der Drehung unterstützen können. Kupplungen oder Verbindungselemente ermöglichen eine sichere Kraftübertragung, während Stoßdämpfer oder Puffer zur Dämpfung von Schwingungen beitragen und so die Lebensdauer der Einrichtung erhöhen. Insgesamt besteht ein wesentlicher Vorteil der vorgenannten Einrichtung darin, dass durch das Prinzip der Zahnraddrehung mittels des entsprechenden Drehmechanismus sowohl beispielsweise eine Zahnstange als auch ein zweites Zahnrad oder Zahnradsegment zur Betätigung des ersten Zahnrades vorgesehen ist. Diese Eigenschaft ermöglicht es, den Shackle in beide Richtungen zu drehen, je nachdem, auf welcher Seite oder ob auf beiden Seiten der Förderstrecke das Betätigungselement angeordnet ist.

Eine zweckmäßige Ausgestaltung der Erfindung ist dadurch gekennzeichnet, dass der Produktabschnitt und das Auslöseelement jeweils ein Übertragungselement umfassen, wobei das Übertragungselement jeweils als ein Übertragungszahnrad ausgebildet und eingerichtet ist, wobei der Produktabschnitt ein Produktabschnittszahnrad und das Auslöseelement ein Auslöseelementzahnrad umfasst. Diese Ausführung, bei der der Produktabschnitt ein Produktabschnittszahnrad und das Auslöseelement ein Auslöseelementzahnrad umfasst, gewährleistet eine präzise und zuverlässige Kraftübertragung bei einer Betätigung des Auslöseelements. Diese Zahnradkombination ermöglicht eine gleichmäßige und kontrollierte Drehbewegung des Produktabschnitts, was die Positionierung und Stabilität der anzuordnenden Lebensmittel während des Transports optimiert und eine Vielzahl von Anwendungen ermöglicht. Darüber hinaus bietet die Übertragung durch die entsprechende Mechanik der Zahnräder eine hohe Zuverlässigkeit und Langlebigkeit der Einrichtung auch unter anspruchsvollen Betriebsbedingungen. Dadurch wird nicht nur die Effizienz der Drehung erhöht, sondern auch die Anpassungsfähigkeit der Anlage an unterschiedliche Produktionsanforderungen, was die Gesamtleistung und Vielseitigkeit der Anlage verbessert.

Gemäß einer weiteren bevorzugten Ausführungsform der Erfindung ist der mindestens eine Auslöseabschnitt mit mindestens einem Betätigungselement und/oder mindestens einem Stellelement in Eingriff bringbar, um eine Betätigung des mindestens einen Auslöseabschnitts und eine Veränderung des Auslöseelements zumindest zwischen einer ersten Auslöseposition und einer zweiten Auslöseposition auszubilden und einzurichten. Dies ermöglicht eine gezielte und präzise Steuerung des Auslöseelements, so dass es zuverlässig zumindest zwischen einer ersten und einer zweiten Auslöseposition beweglich ist. Diese Beweglichkeit verbessert die Anpassungsfähigkeit der Anlage, indem sie eine genaue Kontrolle über die Drehung und Positionierung des Produktabschnitts zu konkret vorgesehenen Zeitpunkten erlaubt. Darüber hinaus trägt die Möglichkeit der variablen Positionierung zur Effizienz des gesamten Förderprozesses bei und gewährleistet eine gleichmäßige Handhabung der Lebensmittel während der Bearbeitung. Vorzugsweise ist der Auslöseabschnitt zwischen mehr als zwei Auslösepositionen veränderbar. Durch mehr als zwei Auslösepositionen können insbesondere unterschiedliche Winkel in Bezug auf die bestimmungsgemäße Drehbewegung eingestellt werden, um je nach vorgesehenem Anwendungsfall eine entsprechende Veränderung auszubilden und einzurichten.

Eine weitere zweckmäßige Ausgestaltung der Erfindung ist dadurch gekennzeichnet, dass das mindestens eine Betätigungselement als zumindest abschnittsweise entlang einer Förderstrecke angeordnete Kurvenbahn ausgebildet und eingerichtet ist. Eine Kurvenbahn ermöglicht eine präzise Steuerung des Auslösemechanismus während des Transports, indem sie die Bewegung des Auslöseelements präzise und gleichmäßig entlang der Förderstrecke führt. Dies ermöglicht eine exakte Steuerung der Position und Rotation des Produktabschnitts, was besonders bei empfindlichen zu fördernden Lebensmitteln von Bedeutung ist. Darüber hinaus kommt die Kurvenbahn vorzugsweise ohne zusätzliche mechanische oder elektronische Antriebe aus, was die Ausführung insgesamt einfacher, wartungsärmer und kostengünstiger macht. Der Einsatz einer Kurvenbahn, insbesondere einer fest installierten Kurvenbahn, ermöglicht eine hohe Zuverlässigkeit, da sie weniger störanfällig ist. Darüber hinaus bietet die Kurvenbahn die Möglichkeit, die Bewegung individuell an die Anforderungen verschiedener Förderstrecken oder zu fördernder Lebensmittel anzupassen, was die Flexibilität und Vielseitigkeit sowie die Einsatzmöglichkeiten der Einrichtung erhöht.

Eine bevorzugte Weiterbildung der Erfindung zeichnet sich dadurch aus, dass der Grundkörper und/oder das mindestens eine Übertragungselement im Wesentlichen aus einem Formmaterial, insbesondere aus einem Spritzgussmaterial, gebildet ist/sind. Dies ermöglicht eine kosteneffiziente und zugleich flexible Herstellung von Bauteilen in großen Stückzahlen, was insbesondere für die Serienproduktion von Vorteil ist. Spritzgussmaterialien bieten zudem eine hohe Formstabilität und -beständigkeit, was zu einer verbesserten Passgenauigkeit und Zuverlässigkeit der einzelnen Komponenten beiträgt. Da in einer Förderlinie zur Verarbeitung von Geflügel oder Geflügelteilen oft mehrere tausend Halteelemente, insbesondere Shackles, eingesetzt werden, ist es entscheidend, dass die erfindungsgemäße Einrichtung möglichst klein, kompakt und kostengünstig herstellbar ist. Dies wird durch die Verwendung von spritzgegossenen Kunststoffteilen erreicht. Darüber hinaus erlaubt die Verwendung von Spritzgussmaterialien eine flexible Gestaltung der Bauteile, so dass spezifische Anforderungen, wie eine optimierte Form zur Stabilisierung etwaiger Bauteile, leicht berücksichtigt werden können. Zudem trägt die Verwendung eines spritzgegossenen Materials zur Gewichtsreduzierung der Einrichtung bei, was wiederum insgesamt den Energieverbrauch der Fördereinrichtung senkt und den Prozess effizienter gestaltet.

Eine zweckmäßige Ausgestaltung der Erfindung ist dadurch gekennzeichnet, dass mittels des Drehmechanismus bei einer Betätigung des Auslöseelements eine axiale Drehung des Produktabschnitts in einem Bereich von 1° bis 360° vorgesehen ist. Die Möglichkeit der Drehung um die gesamte Achse erlaubt eine genaue Anpassung der Positionierung des Produktabschnitts, was insbesondere bei der Bearbeitung von Lebensmitteln wie Geflügel oder Geflügelteilen für eine optimale Handhabung und Bereitstellung relevant ist. Außerdem ist es auf diese Weise bevorzugt möglich, den Produktabschnitt in feinen Abstufungen zu drehen, wodurch der Prozess an verschiedene Anforderungen angepasst werden kann, sei es zur besseren Sichtbarkeit für Inspektionen oder zur Optimierung der nachfolgenden Bearbeitung. Darüber hinaus trägt die vollständige Rotationsmöglichkeit zur Vielseitigkeit der Einrichtung bei, indem sie eine Vielzahl von Anwendungen und Anpassungen ermöglicht, die den spezifischen Anforderungen der Lebensmittelverarbeitung gerecht werden.

Eine vorteilhafte Weiterbildung zeichnet sich dadurch aus, dass die Einrichtung weiter mindestens ein Sicherungselement umfasst, wobei das mindestes eine Sicherungselement zum Sichern des Produktabschnitts bei einer vorgesehenen Drehung ausgebildet und eingerichtet ist. Dieses Sicherungselement gewährleistet eine stabile und zuverlässige Fixierung des Produktabschnittes, wodurch das Risiko unerwünschter Bewegungen oder Fehlstellungen von Lebensmitteln während des Förderprozesses minimiert wird. Durch das Sicherungselement ist es möglich, das Gerät in den gewünschten Positionen zu fixieren und einerseits eine sichere Handhabung während des Betriebs zu gewährleisten und andererseits einen unerwünschten Wechsel zwischen verschiedenen Drehpositionen zu verhindern. Das Sicherungselement kann mit anderen Worten auch als Verriegelungsmechanismus bezeichnet werden. Der Verriegelungsmechanismus zeichnet sich vorzugsweise dadurch aus, dass der Drehmechanismus als Verriegelungsmechanismus mit mindestens einem in oder an dem Auslöseelement und/oder in oder an dem mindestens einen Übertragungselement ausgebildet und eingerichtet ist, um den Produktabschnitt in einer gewünschten oder vorgegebenen Drehposition fest zu arretieren. Durch den insbesondere integrierten Verriegelungsmechanismus ist es möglich, den Produktabschnitt mit dem Shackle in der gewünschten Drehposition fest zu arretieren. Dieser Verriegelungsmechanismus, der beispielsweise in das Auslöseelement, insbesondere in die Zahnstange, oder in das mindestens eine Übertragungselement, insbesondere in ein Zahnrad, integriert ist, stellt sicher, dass der Produktabschnitt, insbesondere ein daran angeordneter Shackle, in jedem beliebigen Winkel zuverlässig und fest gehalten wird. In einer bevorzugten Ausführungsform bleibt dadurch die Position des Produktabschnitts bzw. des Shackles zwischen dem mindestens einen Betätigungselement, bevorzugt zwei Betätigungselementen, fixiert, wodurch eine präzise und zuverlässige Bearbeitung ermöglicht wird. Dadurch sind die Lebensmittel während des gesamten Transports in der gewünschten Position gehalten.

Des Weiteren wird die Aufgabe durch die eingangs genannte Vorrichtung dadurch gelöst, dass mindestens eine der Einrichtung nach der erfindungsgemäßen Einrichtung ausgebildet und eingerichtet ist. Zur Vermeidung von Wiederholungen wird im Zusammenhang mit der erfindungsgemäßen Vorrichtung insbesondere auch auf die bereits im Zusammenhang mit der erfindungsgemäßen Einrichtung im Detail geschilderten Vorzüge verwiesen. Diese gelten in analoger Weise auch für die erfindungsgemäße Vorrichtung.

Eine weitere zweckmäßige Ausgestaltung der Erfindung ist dadurch gekennzeichnet, dass die Vorrichtung weiter mindestens ein derart entlang der Förderstrecke angeordnetes Betätigungselement und/oder Stellelement umfasst, dass das mindestens eine Betätigungselement und/oder Stellelement mit einem Auslöseabschnitt der Einrichtung in Eingriff bringbar ist, um eine Betätigung des mindestens einen Auslöseabschnitts und eine Veränderung des Auslöseelements zumindest zwischen einer ersten Auslöseposition und einer zweiten Auslöseposition auszubilden und einzurichten. Ein wesentlicher Vorteil dieser zweckmäßigen Ausgestaltung liegt in der Integration eines entlang der Förderstrecke angeordneten Betätigungselements und/oder Stellelements, das/die mit mindestens einem Auslöseabschnitt der Vorrichtung in Eingriff gebracht werden kann/können. Diese Anordnung ermöglicht eine präzise und gezielte Betätigung des mindestens einen Auslöseabschnitts, wodurch eine kontrollierte Veränderung des Auslöseelements zwischen der ersten Auslöseposition und der zweiten Auslöseposition gewährleistet ist. Auf diese Weise ist die Position und Drehung des Produktabschnitts steuer- und regelbar, was insbesondere bei der Handhabung von hängenden Lebensmitteln vorteilhaft ist. Durch die dynamische Anpassung der Auslösepositionen ist eine optimale Anpassung der Vorrichtung an unterschiedliche Anforderungen während der Förderung realisierbar, was wiederum die Effizienz und Sicherheit in einem Verarbeitungsbetrieb erhöht. Darüber hinaus trägt die Kombination aus Betätigungselement und Auslöseabschnitt zu einer verbesserten Funktionalität der Vorrichtung bei, indem eine gleichmäßige und störungsfreie Bewegung der Lebensmittel während des Förderprozesses erreicht wird.

In einer weiteren vorteilhaften Ausgestaltung der Erfindung ist das mindestens eine Betätigungselement als eine zumindest abschnittsweise entlang der Förderstrecke angeordnete Kurvenbahn ausgebildet und eingerichtet. Diese Ausgestaltung ermöglicht eine präzise und kontinuierliche Steuerung des Auslösemechanismus, indem die Bewegung des mindestens einen Auslöseabschnitts mittels der Kurvenbahn entlang der vorgegebenen Förderstrecke geführt wird, um eine entsprechende Betätigung des Auslöseelements zu ermöglichen. Durch die vorgesehene Kurvenbahn sind bedarfsgerechte Bewegungsmuster einfach und zuverlässig realisierbar, was eine geeignete Handhabung von hängenden Lebensmitteln auszeichnet. Durch die Kurvenbahn ist eine exakte Positionsanpassung des Produktabschnitts möglich, um entsprechende Lagepositionen der darauf angeordneten Lebensmittel innerhalb des Verarbeitungsprozesses bereitzustellen.

Eine vorteilhafte Weiterbildung der Erfindung zeichnet sich dadurch aus, dass das mindestens eine Stellelement als ein zumindest abschnittsweise entlang der Förderstrecke angeordneter angetriebener oder antreibbarer Stellantrieb ausgebildet und eingerichtet ist. Durch den angetriebenen oder antreibbaren Stellantrieb ist eine gezielte und aktive Steuerung des Auslösemechanismus gegeben, indem das Stellelement durch einen Antrieb präzise und individuell bewegbar ist. Durch den Einsatz eines Stellantriebs ist eine exakte Positionsanpassung des Produktabschnitts möglich, was zu einer höheren Flexibilität und Anpassungsfähigkeit im Verarbeitungsprozess führt. Dies ist besonders dann von Vorteil, wenn eine schnelle Reaktion auf unterschiedliche Lebensmittelgrö-ßen oder spezifische Prozessanforderungen erforderlich ist. Darüber hinaus trägt der angetriebene Stellantrieb zur Automatisierung und Effizienzsteigerung der Vorrichtung bei, da er eine präzise und wiederholbare Positionierung ermöglicht. Weiterhin ist es auf diese Weise möglich, nur einzelne erfindungsgemäße Einrichtungen nach vorgegebenen Parametern zu drehen, ohne eine entsprechende Drehung für alle entlang der Förderstrecke geförderten erfindungsgemäßen Einrichtungen auszubilden und einzurichten.

Weitere zweckmäßige und/oder vorteilhafte Merkmale und Weiterbildungen sowie bevorzugte Vorrichtungsgegenstände ergeben sich aus den Unteransprüchen und der Beschreibung. Besonders bevorzugte Ausführungsformen der Einrichtung oder der Vorrichtung werden anhand der beigefügten Zeichnungen näher erläutert. In den Zeichnungen zeigen:
- Fig. 1: eine schematische Darstellung einer ersten Ausführungsform einer erfindungsgemäßen Einrichtung in einer Explosionsdarstellung,
- Fig. 2: eine weitere schematische Darstellung der in Fig. 1 gezeigten erfindungsgemäßen Einrichtung im zusammengebauten Zustand,
- Fig. 3: eine schematische Darstellung einer zweiten Ausführungsform einer erfindungsgemäßen Einrichtung im zusammengebauten Zustand,
- Fig. 4: eine schematische Darstellung eines Ausschnitts einer ersten Ausführungsform einer erfindungsgemäßen Vorrichtung in perspektivischer Ansicht,
- Fig. 5: eine schematische Darstellung eines Ausschnitts einer zweiten Ausführungsform einer erfindungsgemäßen Vorrichtung in perspektivischer Ansicht,
- Fig. 6: eine schematische Detailansicht einer weiteren Ausführungsform einer erfindungsgemäßen Einrichtung in Draufsicht
und
- Fig. 7: eine schematische Darstellung von erfindungsgemäßen Einrichtungen in verschiedenen bestimmungsgemäßen Anwendungsfällen.

Anhand der vorgenannten Figuren wird die erfindungsgemäße Einrichtung 10 und die erfindungsgemäße Vorrichtung 100 näher beschrieben.

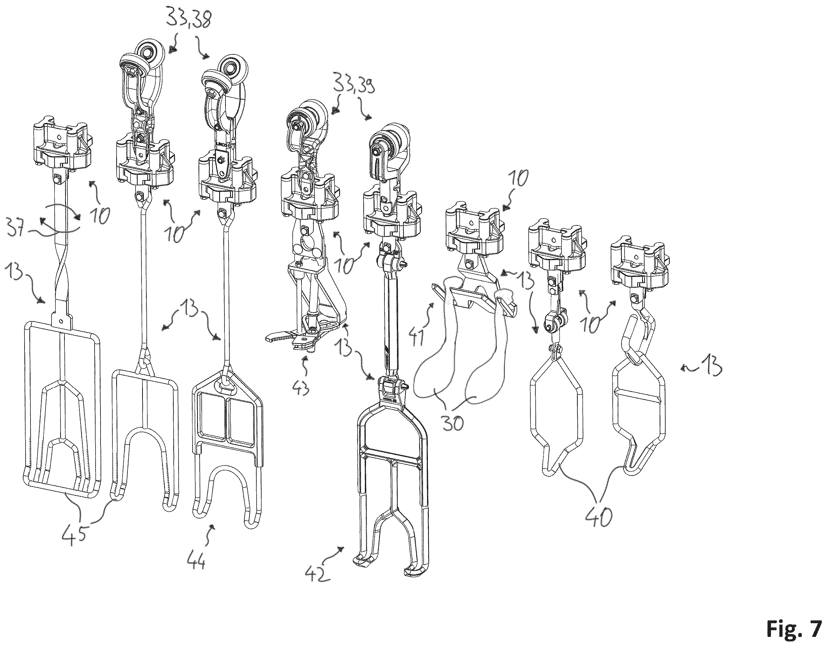

Die in den Zeichnungen dargestellten Einrichtungen 10 sowie Vorrichtungen 100 sind beispielhaft zum Fördern von hängendem Geflügel 30, insbesondere von Geflügelteilen 30, wie Geflügelbeinen 30 oder dergleichen dargestellt, wozu in Fig. 7 beispielhaft hängende Geflügelbeine 30 als zu förderndes bzw. zu drehendes Lebensmittel 30 gezeigt sind. Die Erfindung bezieht sich jedoch ganz allgemein und in gleicher Weise auf Einrichtungen 10 bzw. Vorrichtungen 100, die generell zum Drehen oder Fördern von hängenden Lebensmitteln 30 vorgesehen und ggf. entsprechend anpassbar sind.

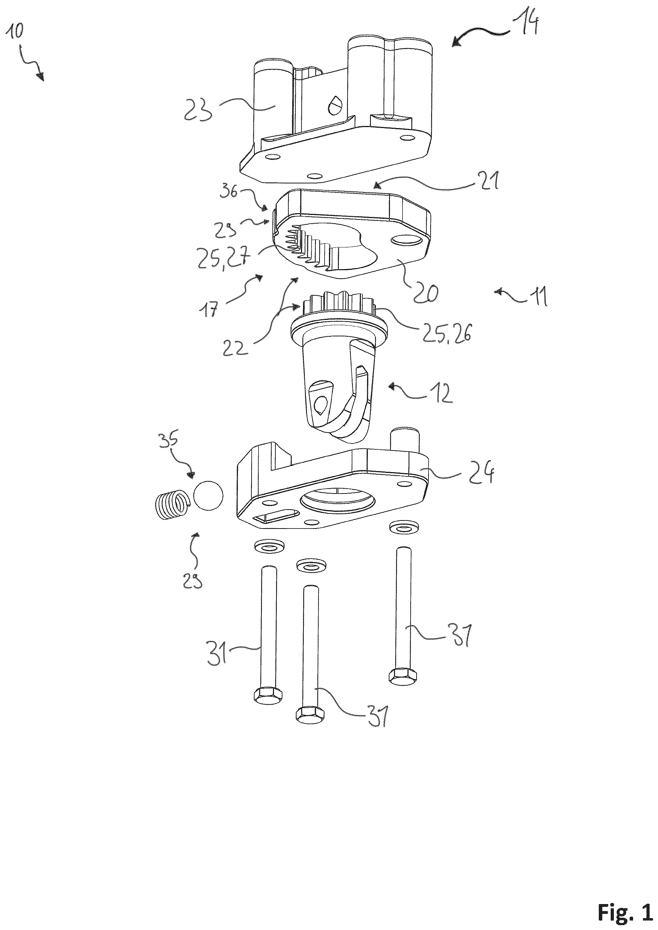

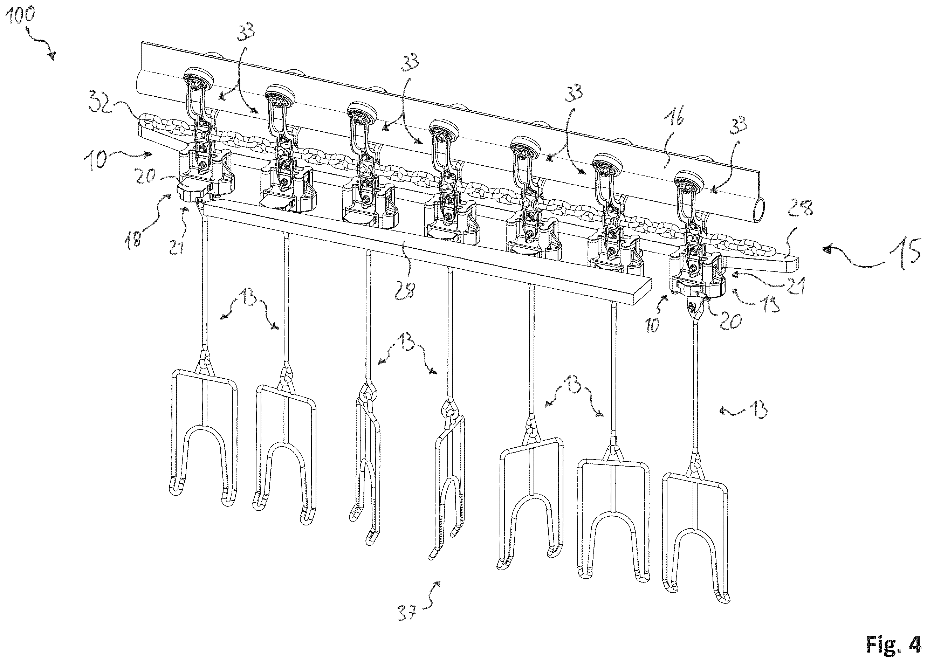

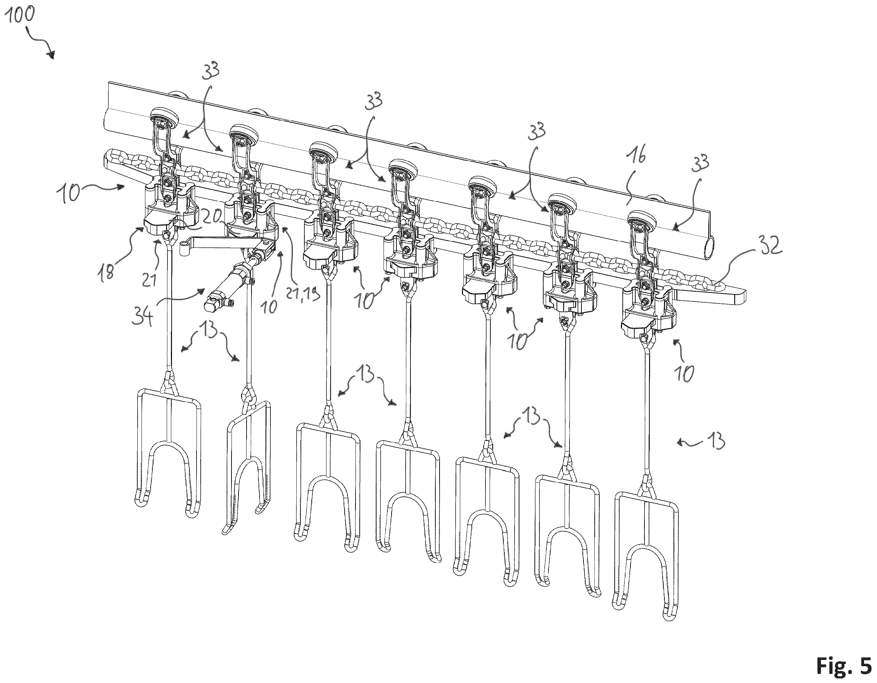

In den Fig. 1 bis Fig. 7 sind jeweils schematisch Ausführungsformen einer Einrichtung 10, ausgebildet und eingerichtet zum Verändern der axialen Ausrichtung von hängenden Lebensmitteln 30, insbesondere von Geflügel 30 oder Geflügelteilen 30, gezeigt. Die gezeigten Einrichtungen 10 einen Grundkörper 11 mit einem Produktabschnitt 12 zum hängenden Anordnen von Lebensmitteln 30, insbesondere von Geflügel 30 oder Geflügelteilen 30, mittels mindestens eines an dem Produktabschnitt 12 anordenbaren Halteelements 13 und einem Transportabschnitt 14 zum Anordnen der Einrichtung 10 an einer Fördereinrichtung 15, zum zumindest abschnittsweisen Bewegen der Einrichtung 10 entlang einer Förderstrecke 16. Unterschiedliche Halteelemente 13 zum hängenden Anordnen von Lebensmitteln 30, insbesondere von Geflügel 30 oder Geflügelteilen 30 sind insbesondere in den Fig. 4, Fig. 5 und Fig. 7 dargestellt. Darüber hinaus zeigen die Fig. 4, Fig. 5 und Fig. 7 entsprechende Transportelemente 33, die zum Bewegen der Einrichtungen 10 entlang der Förderstrecke 15 mittels der Fördereinrichtung 15 vorgesehen sind. Ausschnitte von Fördereinrichtungen 15 sind beispielhaft in den Fig. 4 und Fig. 5 gezeigt. Derartige Fördereinrichtungen 15 weisen in der Regel mindestens ein Förderelement 32, was vorliegend als Förderkette 32 ausgebildet ist, auf, um die entsprechenden Transportabschnitte 14 entlang der Förderstrecke 16 zu transportieren. Es können jedoch ebenfalls weitere Fördereinrichtungen 15 in Betracht kommen, die keine entsprechenden Förderelemente 32 aufweisen.

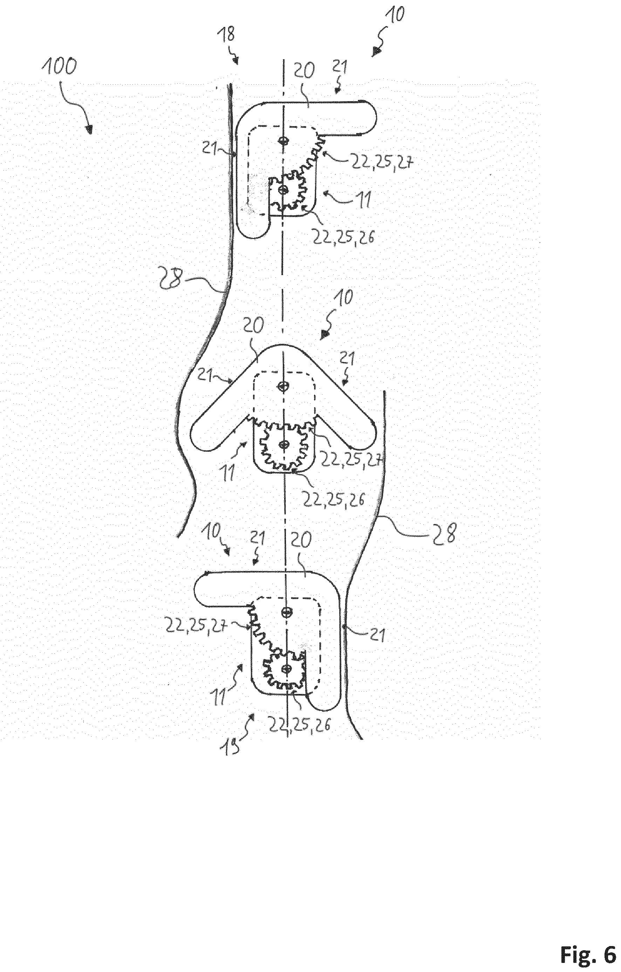

Diese Einrichtung 10 zeichnet sich erfindungsgemäß dadurch aus, dass die Einrichtung 10 einen Drehmechanismus 17 umfasst, wobei der Drehmechanismus 17 zum zumindest abschnittsweisen Drehen des Produktabschnitts 12 ausgebildet und eingerichtet ist. In der Fig. 4 und der Fig. 5 ist der Vorgang des Drehens mittels des Drehmechanismus 17 exemplarisch gezeigt, indem die an dem Produktabschnitt 12 angeordneten Halteelemente 13 eine axiale Veränderung in Verlauf der Transportrichtung erfahren. Der Drehmechanismus 17 umfasst dazu ein zwischen zumindest einer ersten Auslöseposition 18 und einer zweiten Auslöseposition 19 veränderbares Auslöseelement 20 mit mindestens einem Auslöseabschnitt 21 und mindestens ein mit dem mindestens einen Auslöseelement 20 verbundenes Übertragungselement 22. Das Auslöseelement 18 mit seinen veränderlichen Positionen 18, 19 ist im Detail in der Draufsicht der Fig. 6 abgebildet. In der Fig. 6 sind hierzu drei Positionen dargestellt, wobei der Übergang zwischen den einzelnen Positionen vorzugsweise fließend ist. Die erfindungsgemäße Einrichtung 10 zeichnet sich weiter dadurch aus, dass das mindestens eine Übertragungselement 22 derart mit dem Produktabschnitt 12 in Wirkverbindung steht, dass zumindest bei einem Wechsel des Auslöseelements 20 von der ersten Auslöseposition 18 in die zweite Auslöseposition 19 eine Veränderung des Produktabschnitts 12 mittels des mindestens einen Übertragungselements 22 zur zumindest abschnittsweisen axialen Drehung der Ausrichtung des Produktabschnitts 12 ausgebildet und eingerichtet ist. In der Fig. 6 sind entsprechende Übertragungselemente 22, die auch als Übertragungsabschnitte bezeichnet werden können, gezeigt, wobei diese bei einem Wechsel zwischen den Auslösepositionen 18, 19 eine axiale Veränderung des Produktabschnitts und dadurch des jeweiligen Halteelements 13 bzw. des Lebensmittels 30 herbeiführen, was in den Fig. 4 und Fig. 5 gezeigt ist.

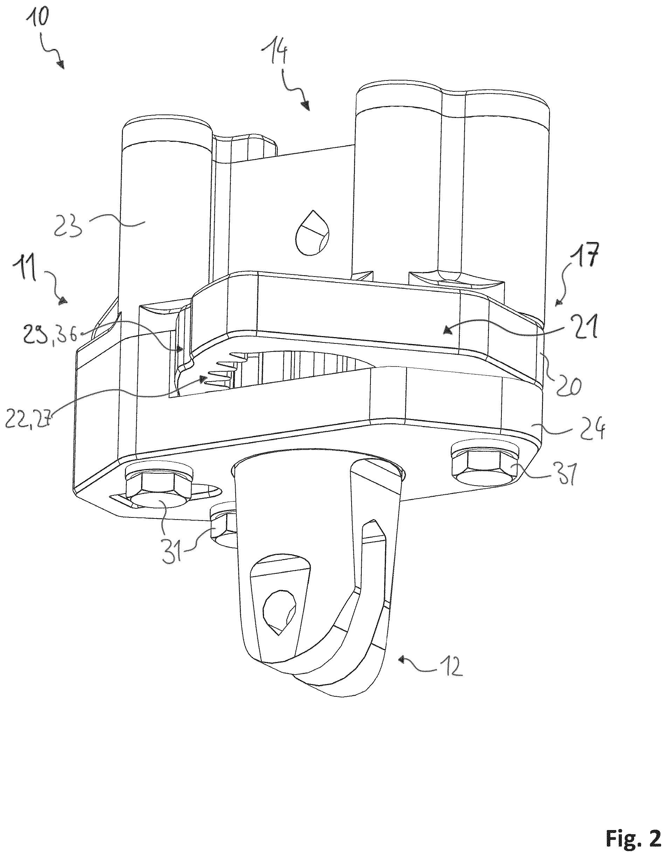

Der Explosionsdarstellung der Fig. 1 sind die wesentlichen Bauteile der erfindungsgemäßen Einrichtung 10 im Detail zu entnehmen. Der Grundkörper 11 der Einrichtung ist zumindest aus einem dem Transportabschnitt 14 zugewandten Grundkörperunterteil 23 und einem dem Produktabschnitt 12 zugewandten Grundkörperoberteil 24 gebildet. Weitere Bauteile können beispielsweise in Abhängigkeit von der Ausgestaltung der Fördereinrichtung 15 und/oder der an dem Produktabschnitt 12 anzuordnenden Halteelemente 13 und/oder der geförderten Lebensmittel 30 hiervon abweichend ausgebildet sein und insbesondere noch zusätzliche Bestandteile umfassen. Weiter bevorzugt umfasst die Einrichtung mindestens ein Befestigungselement 31, um das Grundkörperunterteil 23 und das Grundkörperoberteil 24 miteinander zu verbinden. Wie der Fig. 2 und insbesondere der Fig. 1 zu entnehmen ist, ist der Drehmechanismus 17 vorzugsweise im Wesentlichen zwischen dem Produktabschnitt 12 und dem Transportabschnitt 14, insbesondere im Wesentlichen innerhalb des Grundkörpers 11 zwischen dem Grundkörperunterteil 23 und dem Grundkörperoberteil 24, ausgebildet und eingerichtet. In weiteren bevorzugten Ausführungsformen kann es vorgesehen sein, wenn der Grundkörper 11 zumindest abschnittsweise von einem - in den Figuren nicht gezeigten - Gehäuse umschlossen ist. In einer weiteren vorteilhaften Ausführungsform ist der Grundkörper 11 und/oder das mindestens eine Übertragungselement 22 im Wesentlichen aus einem Formmaterial, insbesondere aus einem Spritzgussmaterial, gebildet ist/sind. Besonders bevorzugt besteht das Material des Grundkörpers 11 und/oder des mindestens einen Übertragungselement 22 aus mindestens einem Kunststoff.

Vorzugsweise umfassen der Produktabschnitt 12 und das Auslöseelement 20 jeweils ein Übertragungselement 22, wobei das Übertragungselement 22 jeweils als ein Übertragungszahnrad 25 ausgebildet und eingerichtet ist, wobei der Produktabschnitt 12 ein Produktabschnittszahnrad 26 und das Auslöseelement 20 ein Auslöseelementzahnrad 27 umfasst. In weiteren bevorzugten Ausführungsformen ist das Auslöseelementzahnrad 27 als entsprechende Zahnstange ausgebildet. In alternativen Ausführungsformen kann es zweckmäßig sein, dass das jeweilige Übertragungselement 22 des Produktabschnitts 12 und/oder des Auslöseelements 20 nicht unmittelbar umfasst/umfassen, sondern dass das jeweilige Übertragungselement 22 mit dem zugehörigen Produktabschnitt 12 und/oder dem Auslöseelement 20 verbunden, insbesondere unlösbar verbunden ist. Die Übertragungselemente 22 des Produktabschnitts 12 und des Auslöseelements 20 sind derart ausgebildet und eingerichtet, dass sie miteinander zusammenwirken, um bei einer Betätigung des Auslöseelements 20 eine Kraftübertragung zum Bereitstellen der Positionsänderung zu bewirken.

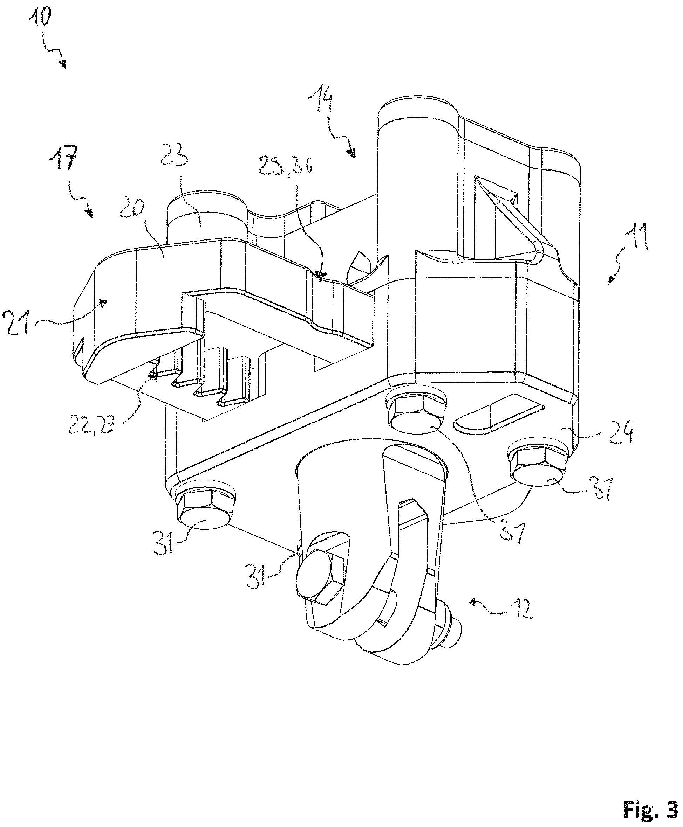

Besonders bevorzugt ist der Drehmechanismus 17 als Stirnradgetriebe, insbesondere als ein Zahnstangengetriebe ausgebildet und eingerichtet. Insbesondere die Fig. 1 und die Fig. 6 zeigen jeweils die Bauteile, die das entsprechende Stirnradgetriebe bzw. Zahnstangengetriebe bilden. In der Fig. 1 weist der Produktabschnitt 12 auf der das Produkt abweisenden Seite ein Zahnrad auf, das zum Zusammenwirken mit einer innerhalb des Auslöseelements 20 angeordneten Zahnstange bzw. einem innenverzahnten Stirnrad vorgesehen ist. In der zweiten Ausführungsform der erfindungsgemäßen Einrichtung 10 in Fig. 3 ist ein äquivalenter Aufbau der ersten Ausführungsform der erfindungsgemäßen Einrichtung 10 gezeigt, wobei hier jedoch eine Zahnstange zum Zusammenwirken mit dem Zahnrad des Produktabschnitts 12 vorgesehen ist. Vorzugsweise ist mittels des Drehmechanismus 17 bei einer Betätigung des Auslöseelements 20 eine axiale Drehung des Produktabschnitts 12 in einem Bereich von 1 ° bis 360° vorgesehen.

Wie in den Fig. 4 bis Fig. 6 gezeigt, ist in einer bevorzugten Ausführungsform der mindestens eine Auslöseabschnitt 21 mit mindestens einem Betätigungselement 28 und/ oder mindestens einem Stellelement 34 in Eingriff bringbar, um eine Betätigung des mindestens einen Auslöseabschnitts 21 und eine Veränderung des Auslöseelements 20 zumindest zwischen einer ersten Auslöseposition 18 und einer zweiten Auslöseposition 19 auszubilden und einzurichten. Durch ein Ineingriffbringen zwischen dem mindestens einen Betätigungselement 28 und/oder dem mindestens einen Stellelement 34 ist eine Veränderung des Produktabschnitts 12 bewirkbar, wodurch wiederum die Lebensmittel 30 in ihrer axialen Ausrichtung veränderbar sind. Vorzugsweise ist dazu das mindestens eine Betätigungselement 28 als zumindest abschnittsweise entlang einer Förderstrecke 16 angeordnete Kurvenbahn 28 ausgebildet und eingerichtet. In der Fig. 4 und der Fig. 6 sind jeweils zwei Betätigungselemente 28 dargestellt, die jeweils als Kurvenbahnen 28 zur Veränderung der Ausrichtung des Produktabschnitts 12 und somit von Lebensmitteln 30 vorgesehen sind. Wenn die entlang der Förderstrecke 16 mittels der Fördereinrichtung 15 an den Transportelementen 33 transportierten Transportabschnitte 14 in Eingriff mit der Kurvenbahn 28 gebracht werden, erfolgt ein Wechsel des Auslöseabschnitts 21 und eine entsprechende Drehung des Produktabschnitts 12 bzw. des jeweiligen daran angeordneten Halteelements 13 oder Lebensmittels wird ausgebildet, wie dies in der Fig. 4 gezeigt ist. Die Kurvenbahnen 28 können im Allgemeinen je nach vorgesehenem Einsatzzweck bzw. gewünschter Bearbeitung oder gewünschter Drehbewegung 37 individuell und bedarfsgerecht ausgebildet sein, wie dies auch beispielhaft in Fig. 6 dargestellt ist. In weiteren bevorzugten Ausführungsformen kann es darüber hinaus zweckmäßig sein, wenn die Kurvenbahnen 28 veränderlich ausgebildet und eingerichtet sind, wobei eine angepasste Drehung mittels der erfindungsgemäßen Einrichtung 10 bereitstellbar ist. Dadurch ist insbesondere die Geschwindigkeit der zu drehenden Halteelemente 13 auch bei sehr hohen Fördergeschwindigkeiten gezielt anpassbar, um vorzugsweise eine langsame, aber bevorzugt eine konstante Drehbewegung 37 insbesondere in Bezug auf die Fördergeschwindigkeit auszubilden und einzurichten. Weiter bevorzugt ist eine entsprechende individuelle Anpassung der Drehgeschwindigkeit mittels des mindestens einen Stellelements 34 realisierbar. Das mindestens eine Betätigungselement 28 und/oder das mindestens eine Stellelement 34 ermöglichen somit eine bedarfsgerechte Anpassung der Drehgeschwindigkeit der jeweiligen Halteelemente 13, wodurch insbesondere langsame oder individuell anpassbare Drehbewegungen 37 ermöglicht werden.

In Fig. 5 ist das dargestellte Stellelement 34 als Pneumatikzylinder ausgebildet und eingerichtet. In weiteren, nicht abgebildeten bevorzugten Ausführungsformen kann mindestens eines der Stellelemente 34 alternativ oder zusätzlich mindestens einen Servoantrieb zur Realisierung der Positionsveränderung bei der entsprechenden Betätigung aufweisen. Die Geschwindigkeit sowie der zu erzielende Winkel der Drehbewegung 37 sind auf diese Weise individuell und/oder bedarfsgerecht anpassbar. In weiteren bevorzugten Ausführungsformen kann das Stellelement 34 mit alternativen oder zusätzlichen Mitteln ausgestaltet sein, um einen entsprechenden Impuls zur Bereitstellung der Drehung der erfindungsgemäßen Einrichtung 10 auszubilden und einzurichten.

Aus der Explosionsdarstellung in der Fig. 1 ist vorzugsweise zu entnehmen, dass die erfindungsgemäße Einrichtung 10 weiter mindestens ein Sicherungselement 29 umfasst, wobei das mindestens eine Sicherungselement 29 zum Sichern des Produktabschnitts 12 bei einer vorgesehenen Drehung ausgebildet und eingerichtet ist. In dem Ausführungsbeispiel der Fig. 1 sind zwei Sicherungselement 29 vorgesehen, die zusammen den Sicherungsmechanismus, der auch als Verriegelungsmechanismus bezeichnet werden kann, bilden. Eines der Sicherungselement 29 wird vorliegend durch ein Eingriffselement 35 und eine Eingriffsausnehmung 36 gebildet. In weiteren bevorzugten Ausführungsformen können eine Viel- oder Mehrzahl an Eingriffsausnehmungen 36 vorgesehen sein, die zum Eingriff und entsprechenden Sichern des Auslöseelements 20 in einer vorgegebenen Position ausgebildet und eingerichtet sind. Zum Sichern ist das entsprechende Eingriffselement 35 mit der mindestens einen Eingriffsausnehmung 36 arretierbar, wodurch eine Positionssicherung erfolgt.

Die erfindungsgemäße Vorrichtung 100, die zum Fördern von hängenden Lebensmitteln 30, insbesondere von Geflügel 30 oder Geflügelteilen 30, ausgebildet und eingerichtet ist, wird nachfolgend nur in ausgewählten Aspekten näher beschrieben, da die Vorrichtung 100 im Wesentlichen bereits im Zusammenhang mit der erfindungsgemä-ßen Einrichtung 10 beschrieben worden ist. Wie in den Fig. 4 und Fig. 5 gezeigt ist, umfasst die erfindungsgemäße Vorrichtung 100 mindestens eine Fördereinrichtung 15 mit einer zum hängenden Fördern von Lebensmitteln 30 entlang einer Förderstrecke 16 mit einer Mehrzahl von jeweils zur Aufnahme eines Lebensmittels 30 eingerichteten Einrichtung 10. Zur Anordnung der Lebensmittel 30 ist an der Einrichtung 10 vorzugsweise mindestens ein Halteelement 13 vorgesehen, das zur entsprechenden Aufnahme der Lebensmittel 30 ausgebildet und eingerichtet ist. Je nach Ausgestaltung der Vorrichtung 100 oder Einrichtung 10 bzw. der zu fördernden Lebensmitteln 30 können mehrere Lebensmittel 30, wie beispielsweise Geflügelbeine 30, an einer einzigen Einrichtung 10 entsprechend aufgenommen werden. Die Vorrichtung 100 zeichnet sich erfindungsgemäß dadurch aus, dass mindestens eine der zur Aufnahme der Lebensmittel 30 vorgesehenen Einrichtungen 10 als erfindungsgemäße Einrichtung 10 ausgebildet und eingerichtet ist. Mit der erfindungsgemäßen Einrichtung 10 ist eine entsprechende axiale Veränderung der daran angeordneten Lebensmittel 30, insbesondere Geflügel 30 oder Geflügelteile 30, realisierbar.

In einer weiteren bevorzugten Ausführungsform umfasst die Vorrichtung 100 weiter mindestens ein derart entlang der Förderstrecke 16 angeordnetes Betätigungselement 28 und/oder Stellelement 34, dass das mindestens eine Betätigungselement 28 und/ oder Stellelement 34 mit einem Auslöseabschnitt 21 der erfindungsgemäßen Einrichtung 10 in Eingriff bringbar ist, um eine Betätigung des mindestens einen Auslöseabschnitts 21 und eine Veränderung des Auslöseelements 20 zumindest zwischen einer ersten Auslöseposition 18 und einer zweiten Auslöseposition 19 auszubilden und einzurichten. Die Veränderung der Auslösepositionen 18, 19 ist exemplarisch in den Fig. 4 und Fig. 5 gezeigt. In der Fig. 4 sind entsprechende Halteelemente 13 gezeigt, die sich gerade im Drehvorgang befinden. Durch die in Fig. 4 entlang der Förderstrecke 16 angeordneten Betätigungselemente 28 erfolgt in dem gezeigten Ausführungsbeispiel bei sämtlichen entlang der Förderstrecke 16 geförderten Einrichtungen 10 eine Drehung der Halteelemente 13 um 180° um die Längsachse, so dass bei sämtlichen Halteelementen 13, die das Betätigungselement 28 passieren, eine Drehung um 180° während des Fördervorgangs erfolgt. Fig. 6 zeigt eine beispielhafte Drehung von Einrichtungen 10 mittels zweier Betätigungselemente 28, wobei die einzelnen Bauteile der Einrichtung 10 in einer alternativen Ausgestaltung vorliegen. Das in Fig. 5 nochmals gezeigte Stellelement 34 ermöglicht eine selektive Drehung einzelner Einrichtungen 10, indem bedarfsweise eine Betätigung gewünschter Einrichtungen 10 erfolgt, was hier bei jedem zweiten der Halteelemente 13 der Fall ist, wodurch diese jeweils sequentiell um 180° gedreht werden. Grundsätzlich ist mittels des mindestens einen Betätigungselements 28 und/oder des mindestens einen Stellelements 34 vorzugsweise eine beliebige Drehung im Bereich von 1° bis 360° möglich, was von den vorherrschenden Bauteilen sowie den Bearbeitungswünschen abhängt.

Weiter bevorzugt ist bei der erfindungsgemäßen Vorrichtung 100, wie in den Fig. 4 und Fig. 6 im Detail gezeigt, das mindestens eine Betätigungselement 28 als eine zumindest abschnittsweise entlang der Förderstrecke 16 angeordnete Kurvenbahn 28 ausgebildet und eingerichtet. Weiter bevorzugt ist das mindestens eine Stellelement 34 als ein zumindest abschnittsweise entlang der Förderstrecke 16 angeordneter angetriebener oder antreibbarer Stellantrieb 34 ausgebildet und eingerichtet ist.

Fig. 7 zeigt ferner eine nicht abschließende beispielhafte Aufstellung verschiedener Halteelemente 13 und Transportelemente 33, die zur Verwendung mit der erfindungsgemäßen Einrichtung 10 sowie zum Fördern mit der erfindungsgemäßen Vorrichtung 100 vorgesehen sein können. An einem der Halteelemente sind stilisiert zwei angeordnete Geflügelbeine 30 dargestellt, die stellvertretend für allgemein hängende Lebensmittel 30 zu verstehen sind. In Fig. 7 ist weiterhin beispielhaft die bei einer der erfindungsgemäßen Einrichtungen 10 mögliche Drehbewegung 37 zur axialen Veränderung des jeweils mit dem Produktabschnitt 12 korrespondierenden Halteelements 13 dargestellt. Bei den weiteren in den Figuren dargestellten erfindungsgemäßen Einrichtungen 10 ist die Drehbewegung 37 nicht explizit gekennzeichnet, erfolgt jedoch analog. Darüber hinaus sind in Fig. 7 zwei der Transportelemente 33 als Rohrschienenfahrwerke 38, sogenannte "Pipe Track Trolleys", ausgebildet. Zwei weitere Transportelemente 33 sind als T-Stück-Fahrwerke 39, sogenannte "Tee Track Trolleys", ausgebildet. Das jeweils zugehörige Förderelement 32, die Förderkette 32, ist in den schematischen Ausführungsformen der Fig. 7 nicht enthalten.

Die in Fig. 7 von rechts nach links gezeigten Halteelemente 13 sind im Übrigen für unterschiedliche Einsatzzwecke vorgesehen, auf die nachfolgend kurz eingegangen wird. In der Darstellung der Fig. 7 sind unterschiedlich ausgebildete Halteelemente 13 zur Verwendung mit der erfindungsgemäßen Einrichtung 10 gezeigt. Die Halteelemente 13 ganz rechts sind für eine Wiege-, Transfer- und Sortierlinie 40 (Weighing, Transfer und Sorting Line) vorgesehen. Das nächste Halteelement 13 ist für eine Luftkühlungs-, Transfer- und Verteilungslinie 41 (Air Cooling, Transfer und Distribution Line) zur Kühlung und Verteilung von Produkten bestimmt. Das nächste Halteelement 13 ist für eine Kommissionierung- und/oder Ausweidungslinie 42 (Picking and/or Evisceration Line) bestimmt, um eine präzise und zuverlässige Handhabung während des Ausweidungsvorgangs zu gewährleisten. Daran schließt sich ein Halteelement 13 an, das für eine Innereiensatzlinie 43 (Giblet Pack Line) ausgebildet ist und eine sichere und hygienische Bereitstellung von Innereien ermöglicht. Das vorletzte Halteelement 13 ist für eine Ausweidelinie 44 (Evisceration Line) vorgesehen. Die Halteelemente 13 ganz links sind für eine Tötungs- und Federentfernungslinie 45 (Kill & Defeathering Line) vorgesehen. Jedes der dargestellten Halteelemente 13 ist für den Einsatz mit der erfindungsgemäßen Einrichtung 10 in verschiedenen Operationen bei einer erfindungsgemäßen Vorrichtung 100 vorgesehen.

In einer weiteren bevorzugten Ausführungsform wird/werden mittels mindestens einer - in den Figuren nicht im Detail dargestellten - Rechnereinheit und/oder mittels mindestens einer Steuereinheit die Drehung der entsprechenden mittels der Vorrichtung 100 geforderten Lebensmittel 30 erfasst, bestimmt und/oder gesteuert. Hierzu können weiter bevorzugt zusätzliche Erfassungselemente oder Steuerelemente vorgesehen sein.

## Patentansprüche

1. Einrichtung (10), ausgebildet und eingerichtet zum Verändern der axialen Ausrichtung von hängenden Lebensmitteln (30), insbesondere von Geflügel (30) oder Geflügelteilen (30), umfassend
einen Grundkörper (11) mit einem Produktabschnitt (12) zum hängenden Anordnen von Lebensmitteln (30), insbesondere von Geflügel (30) oder Geflügelteilen (30), mittels mindestens eines an dem Produktabschnitt (12) anordenbaren Halteelements (13) und
einem Transportabschnitt (14) zum Anordnen der Einrichtung (10) an einer Fördereinrichtung (15), zum zumindest abschnittsweisen Bewegen der Einrichtung (10) entlang einer Förderstrecke (16),
**dadurch gekennzeichnet, dass**
die Einrichtung (10) einen Drehmechanismus (17) umfasst, wobei der Drehmechanismus (17) zum zumindest abschnittsweisen Drehen des Produktabschnitts (12) ausgebildet und eingerichtet ist,
wobei der Drehmechanismus (17) ein zwischen zumindest einer ersten Auslöseposition (18) und einer zweiten Auslöseposition (19) veränderbares Auslöseelement (20) mit mindestens einem Auslöseabschnitt (21) und mindestens ein mit dem mindestens einen Auslöseelement (20) verbundenes Übertragungselement (22) umfasst,
wobei das mindestens eine Übertragungselement (22) derart mit dem Produktabschnitt (12) in Wirkverbindung steht, dass zumindest bei einem Wechsel des Auslöseelements (20) von der ersten Auslöseposition (18) in die zweite Auslöseposition (19) eine Veränderung des Produktabschnitts (12) mittels des mindestens einen Übertragungselements (22) zur zumindest abschnittsweisen axialen Drehung der Ausrichtung des Produktabschnitts (12) ausgebildet und eingerichtet ist.

2. Einrichtung (10) nach Anspruch 1, **dadurch gekennzeichnet, dass** der Grundkörper (11) zumindest aus einem dem Transportabschnitt (14) zugewandten Grundkörperunterteil (23) und einem dem Produktabschnitt (12) zugewandten Grundkörperoberteil (24) gebildet ist.

3. Einrichtung (10) nach Anspruch 2, **dadurch gekennzeichnet, dass** der Drehmechanismus (17) im Wesentlichen zwischen dem Produktabschnitt (12) und dem Transportabschnitt (14), insbesondere im Wesentlichen innerhalb des Grundkörpers (11) zwischen dem Grundkörperunterteil (23) und dem Grundkörperoberteil (24), ausgebildet und eingerichtet ist.

4. Einrichtung (10) nach einem oder mehreren der Ansprüche 1 bis 3, **dadurch gekennzeichnet, dass** der Drehmechanismus (17) als ein Stirnradgetriebe, insbesondere als ein Zahnstangengetriebe, ausgebildet und eingerichtet ist.

5. Einrichtung (10) nach einem oder mehreren der Ansprüche 1 bis 4, **dadurch gekennzeichnet, dass** der Produktabschnitt (12) und das Auslöseelement (20) jeweils ein Übertragungselement (22) umfassen, wobei das Übertragungselement (22) jeweils als ein Übertragungszahnrad (25) ausgebildet und eingerichtet ist, wobei der Produktabschnitt (12) ein Produktabschnittszahnrad (26) und das Auslöseelement (20) ein Auslöseelementzahnrad (27) umfasst.

6. Einrichtung (10) nach einem oder mehreren der Ansprüche 1 bis 5, **dadurch gekennzeichnet, dass** der mindestens eine Auslöseabschnitt (21) mit mindestens einem Betätigungselement (28) und/oder mindestens einem Stellelement (34) in Eingriff bringbar ist, um eine Betätigung des mindestens einen Auslöseabschnitts (21) und eine Veränderung des Auslöseelements (20) zumindest zwischen einer ersten Auslöseposition (18) und einer zweiten Auslöseposition (19) auszubilden und einzurichten.

7. Einrichtung (10) nach Anspruch 6, **dadurch gekennzeichnet, dass** das mindestens eine Betätigungselement (28) als zumindest abschnittsweise entlang einer Förderstrecke (16) angeordnete Kurvenbahn (28) ausgebildet und eingerichtet ist.

8. Einrichtung (10) nach einem oder mehreren der Ansprüche 1 bis 7, **dadurch gekennzeichnet, dass** der Grundkörper (11) und/oder das mindestens eine Übertragungselement (22) im Wesentlichen aus einem Formmaterial, insbesondere aus einem Spritzgussmaterial, gebildet ist/sind.

9. Einrichtung (10) nach einem oder mehreren der Ansprüche 1 bis 8, **dadurch gekennzeichnet, dass** mittels des Drehmechanismus (17) bei einer Betätigung des Auslöseelements (20) eine axiale Drehung des Produktabschnitts (12) in einem Bereich von 1° bis 360° vorgesehen ist.

10. Einrichtung (10) nach einem oder mehreren der Ansprüche 1 bis 9, weiter umfassend mindestens ein Sicherungselement (29), wobei das mindestens eine Sicherungselement (29) zum Sichern des Produktabschnitts (12) bei einer vorgesehenen Drehung ausgebildet und eingerichtet ist.

11. Vorrichtung (100), ausgebildet und eingerichtet zum Fördern von hängenden Lebensmitteln (30), insbesondere von Geflügel (30) oder Geflügelteilen (30), umfassend
mindestens eine Fördereinrichtung (15) mit einer zum hängenden Fördern von Lebensmitteln (30) entlang einer Förderstrecke (16) mit einer Mehrzahl von jeweils zur Aufnahme eines Lebensmittels (30) eingerichteten Einrichtung (10), **dadurch gekennzeichnet, dass**
mindestens eine der Einrichtung (10) nach einem oder mehreren der Ansprüche 1 bis 10 ausgebildet und eingerichtet ist.

12. Vorrichtung (100) nach Anspruch 11, **dadurch gekennzeichnet, dass** die Vorrichtung (100) weiter mindestens ein derart entlang der Förderstrecke (16) angeordnetes Betätigungselement (28) und/oder Stellelement (34) umfasst, dass das mindestens eine Betätigungselement (28) und/oder Stellelement (34) mit einem Auslöseabschnitt (21) der Einrichtung (10) in Eingriff bringbar ist, um eine Betätigung des mindestens einen Auslöseabschnitts (21) und eine Veränderung des Auslöseelements (20) zumindest zwischen einer ersten Auslöseposition (18) und einer zweiten Auslöseposition (19) auszubilden und einzurichten.

13. Vorrichtung (100) nach Anspruch 12, **dadurch gekennzeichnet, dass** das mindestens eine Betätigungselement (28) als eine zumindest abschnittsweise entlang der Förderstrecke (16) angeordnete Kurvenbahn (28) ausgebildet und eingerichtet ist.

14. Vorrichtung (100) nach Anspruch 12, **dadurch gekennzeichnet, dass** das mindestens eine Stellelement (34) als ein zumindest abschnittsweise entlang der Förderstrecke (16) angeordneter angetriebener oder antreibbarer Stellantrieb (29) ausgebildet und eingerichtet ist.
